# EUROPÄISCHE PATENTANMELDUNG

(11) **EP 3 369 314 A1**
(43) Veröffentlichungstag der Anmeldung: **05.09.2018**
(21) Anmeldenummer: 18401019.7
(22) Anmeldetag: 26.02.2018
(51) Int. Cl.: A01M 7/00, B67D 7/02

(54) **LANDWIRTSCHAFTLICHE PFLANZENSCHUTZSPRITZE**

(30) Priorität: 03.03.2017 DE 102017104435
(71) Anmelder: Amazonen-Werke H. Dreyer GmbH & Co. KG, 49205 Hasbergen (DE)
(72) Erfinder: Austermann, Stefan, 48291 Telgte (DE); Müller, Norbert, 53179 Bonn (DE); Upmann, Harald, 48565 Steinfurt (DE)

(57) **Zusammenfassung**

Landwirtschaftliche Pflanzenschutzspritze mit einem Flüssigkeitstank, der in seiner obersten Wand, vorzugsweise in seinem höchsten Bereich eine Befüllöffnung mit einem eine an eine Zuleitung angeschlossenen und mit einer Rücksaugverhinderungseinrichtung ausgerüsteten Befüllanschluss zum Befüllen des Flüssigkeitstanks mit Frischwasser, insbesondere aus einem öffentlichen Wassernetz aufweist. Um in einfacher Weise eine Befülleinrichtung mit einer Rücksaugverhinderungseinrichtung zum Befüllen des Flüssigkeitstanks einer landwirtschaftlichen Pflanzenschutzspritze mit Frischwasser aus öffentlichen Wassernetzen mit einer verminderten Bauhöhe für den Betrieb im öffentlichen Straßenverkehr zu schaffen, ist vorgesehen, dass die Zuleitung oberhalb der Befüllöffnung mittels einer Schwenkvorrichtung an dem Flüssigkeitstank angeordnet und/oder dem Flüssigkeitstank zugeordnet und um zumindest 90° aus einer aufrechten Befüllstellung in eine liegende Außerbefüllstellung verbringbar ist.

## Beschreibung

Die Erfindung betrifft eine landwirtschaftliche Pflanzenschutzspritze gemäß dem Oberbegriff des Patentanspruches 1.

Eine derartige landwirtschaftliche Pflanzenschutzspritze ist in EP 0 804 875 A1 beschrieben. Bei dieser Pflanzenschutzspritze ist in der obersten Wand des Flüssigkeitstankes in deren höchsten Bereich eine Befüllöffnung mit einer Befüllanschluss angeordnet. An den Befüllanschluss ist eine Zuleitung angeschlossen. Dem Befüllanschluss ist eine Rücksaugverhinderungseinrichtung zugeordnet. Über die Zuleitung und die Befüllöffnung wird der Flüssigkeitstank mit Frischwasser aus einem öffentlichen Wassernetz befüllt. Über die Rücksaugverhinderungseinrichtung des Befüllanschlusses wird sichergestellt, dass in einfacher und kostengünstiger Weise beim evtl. Druckabfall keine Flüssigkeit aus dem Flüssigkeitstank in das öffentliche Wassernetz gelangen kann. Um dieses zu gewährleisten, ist bei dieser bekannten Pflanzenschutzspritze dem Befüllanschluss in der oberen Wand des Tanks eine Rücksaugverhinderungseinrichtung zugeordnet, die im Bereich der oberen Wand einen größeren Durchmesser als seinen in Durchflussrichtung gesehen oberen Bereich aufweist. Weiterhin weist die Rücksaugverhinderungseinrichtung im Bereich des größeren Durchmessers direkt an den kleineren Durchmesser anschließenden Bereich zumindest einen Durchbruch in der Wandung des Befüllanschlusses auf. Das Befüllanschlusselement weist im Bereich des Durchbruchs einen längeren zumindest annähernd senkrecht verlaufenden Bereich auf, so dass das Befüllanschlusselement mit der Rücksaugverhinderungseinrichtung eine große Bauhöhe aufweist und somit die Bauhöhe der Pflanzenschutzspritze erheblich vergrößert. Hierdurch wird teilweise die zulässige Höhe des Fahrzeuges zumindest im öffentlichen Straßenverkehr überschritten.

Der Erfindung liegt die Aufgabe zu Grunde, in einfacher Weise eine Befülleinrichtung mit einer Rücksaugverhinderungseinrichtung zum Befüllen des Flüssigkeitstanks einer landwirtschaftlichen Pflanzenschutzspritze mit Frischwasser aus öffentlichen Wassernetzen mit einer verminderten Bauhöhe für den Betrieb im öffentlichen Straßenverkehr zu schaffen.

Diese Aufgabe wird erfindungsgemäß dadurch gelöst, dass die Zuleitung oberhalb der Befüllöffnung mittels einer Schwenkvorrichtung an dem Flüssigkeitstank angeordnet und/oder dem Flüssigkeitstank zugeordnet und um zumindest 90° aus einer aufrechten Befüllstellung in eine liegende Außerbefüllstellung verbringbar ist.

Infolge dieser Maßnahme wird eine niedrige Bauhöhe der Pflanzenschutzspritze für den Betrieb im öffentlichen Straßenverkehr durch das Herunterschwenken der Zuleitung in eine liegende Position direkt oberhalb der obersten Wand des Flüssigkeitstanks geschaffen. Somit befindet sich für den Betrieb der Pflanzenschutzspritze im öffentlichen Straßenverkehr der Befüllanschluss und die daran angeschlossene Zuleitung in liegender und anschmiegender Weise direkt auf der obersten Wand des Flüssigkeitstanks aufliegend. Zum Befüllen des Flüssigkeitstanks mit Frischwasser werden der Befüllanschlusses und die daran angeschlossene Zuleitung wieder in die aufrechte Stellung gebracht, so dass die Funktion der Rücksaugverhinderungseinrichtung beim Befüllvorgang des Flüssigkeitstanks gewährleistet ist.

Eine einfache Ausgestaltung der Rücksaugverhinderungseinrichtung für die einfache Verschwenkmöglichkeit des Befüllanschlusses mit der Zuleitung in die liegende Position für den Betrieb im öffentlichen Straßenverkehr wird dadurch erreicht, dass das Ende der Zuleitung des Befüllanschlusses in einem Abstand oberhalb des an dem Flüssigkeitstank angeordneten Bereiches des Befüllanschlusses endet.

Um eine vorschriftsmäßige Ausgestaltung der Rücksaugverhinderungseinrichtung zu gewährleisten, ist vorgesehen, dass der vorstehend definierte Abstand zumindest den in der DIN EN 1717 entsprechenden Vorschriften entspricht.

Um eine vollständige Überleitung der aus dem Ende der Zuleitung ausströmenden Flüssigkeit über die Befüllöffnung in dem Flüssigkeitsbehälter zu gewährleisten, ist vorgesehen, dass dem Ende der Zuleitung des Befüllanschlusses eine Flüssigskeitsbündelungseinrichtung für einen gerichteten Flüssigkeitsstrom in Richtung des an dem Flüssigkeitstank angeordneten Bereiches des Befüllanschlusses zugeordnet ist. Hierdurch wird der aus dem Ende der Zuleitung austretende Flüssigkeitsstrom gebündelt und vollständig über die Befüllöffnung in dem Flüssigkeitsbehälter eingeleitet.

Um in einfacher Weise den Befüllanschlusses nach dem Befüllen des Flüssigkeitstanks mit Frischwasser verschließen zu können, ist vorgesehen, dass dem oberen Ende des an dem Flüssigkeitstank angeordneten Bereiches des Befüllanschlusses zumindest ein den Befüllanschluss für die Außerbefüllstellung verschließendes Verschlusselement zugeordnet ist.

In einfacher Weise ist das Verschlusselement als Kugelhahn ausgebildet.

Um in einfacher und automatisierter Weise das Verschlusselement in die Verschlussstellung nach dem Befüllen des Flüssigkeitstanks mit Frischwasser zu verschließen und zum Befüllen des Flüssigkeitstanks mit Frischwasser zu öffnen, ist vorgesehen, dass das Verschlusselement für dessen Verstellung mittels Übertragungselementen mit der verschwenkbar angeordneten Schwenkvorrichtung und/oder dem Endbereich der Zuleitung verbunden ist.

Ein einfaches und zwangsweises Verbringen des Verschlusselementes in die jeweils erforderliche Position wird dadurch erreicht, dass das Verschlusselement an einer verdrehbaren Welle angeordnet ist, dass die Schwenkvorrichtung mit der verdrehbaren Welle des Verschlusselementes drehfest verbunden ist.

In einfacher Weise wird das zwangsweise Verbringen des Verschlusselementes in die jeweils erforderliche Position dadurch erreicht, dass die Schwenkvorrichtung mittels einer zugeordneten Betätigungsvorrichtung in die jeweils vorgesehene Befüllstellung oder Außerbefüllstellung verbringbar ist.

In einer anderen Ausgestaltung ist vorgesehen, um das Verschlusselement in die jeweils erforderliche Position zu verbringen, dass die Betätigungsvorrichtung als motorisches Betätigungselement ausgebildet ist.

In einer anderen Ausgestaltung kann das Verbringen des Verschlusselement es in die jeweils erforderliche Position dadurch erfolgen, dass die Betätigungsvorrichtung über Übertragungselemente entsprechend der Position von Vorrichtungen, die zum Befüllen des Flüssigkeitstanks in eine Befüll- oder in eine Nichtbefüllposition verbracht werden, betätigt und/oder angesteuert wird.

Weitere Einzelheiten der Erfindung sind der Beispielsbeschreibung und den Zeichnungen zu entnehmen. Die Zeichnungen zeigen
- Fig.1: die an einen Ackerschlepper angekuppelte Pflanzenschutzspritze mit in Arbeitsstellung ausgeklappten Verteilergestänge in perspektivischer Ansicht,
- Fig.2: den Flüssigkeitstank der Pflanzenschutzspritze mit sich in Nichtbefüllstellung befindlicher Zuleitung des Befüllanschluss in vergrößertem Maßstab und in perspektivischer Ansicht,
- Fig.3: die sich in Nichtbefüllstellung befindliche Zuleitung des Befüllanschluss gemäß Fig.2 in ausschnittsweiser Darstellung, in vergrößertem Maßstab und in perspektivischer Ansicht,
- Fig.4: die sich in Nichtbefüllstellung befindliche Zuleitung des Befüllanschluss gemäß Fig.2 und 3 im Schnitt IV-IV,
- Fig.5: den Flüssigkeitstank der Pflanzenschutzspritze mit sich in Zwischenstellung zwischen Nichtbefüllstellung und Befüllstellung befindlicher Zuleitung des Befüllanschlusses in vergrößertem Maßstab und in perspektivischer Ansicht,
- Fig.6: die sich in Zwischenstellung befindliche Zuleitung des Befüllanschlusses gemäß Fig.5 in ausschnittsweiser Darstellung, in vergrößertem Maßstab und in perspektivischer Ansicht,
- Fig.7: die sich in Zwischenstellung befindliche Zuleitung des Befüllanschlusses gemäß Fig.5 und 6 im Schnitt VII-VII,
- Fig.8: den Flüssigkeitstank der Pflanzenschutzspritze mit sich in Befüllstellung befindlicher Zuleitung des Befüllanschlusses in vergrößertem Maßstab und in perspektivischer Ansicht,
- Fig.9: die sich in Befüllstellung befindliche Zuleitung des Befüllanschlusses gemäß Fig.8 in ausschnittsweiser Darstellung, in vergrößertem Maßstab und in perspektivischer Ansicht und
- Fig.10: die sich in Nichtbefüllstellung befindliche Zuleitung des Befüllanschlusses gemäß Fig.8 und 9 im Schnitt X - X.

Die landwirtschaftliche Pflanzenschutzspritze 1 weist einen Rahmen auf, an dem auf der Rückseite das Verteilergestänge 2, das die Laufräder 3 aufweisende Fahrwerk und auf der Vorderseite eine Deichsel zur Ankopplung an die die Pflanzenschutzspritze 1 ziehenden Ackerschlepper 4 angeordnet ist. Auf dem Rahmen befindet sich der Flüssigkeitstank 5 zur Aufnahme der auszubringenden Spritzbrühe mit dem jeweiligen Pflanzenschutzmittel, welches in einer aus Frischwasser bestehenden Trägerflüssigkeit verdünnt ist. Die sich in dem Flüssigkeitstank 5 befindliche Spritzbrühe wird in bekannter Weise über zumindest eine Pumpe, Dosiereinrichtungen und Leitungen denen an dem Verteilergestänge 2 angeordneten Verteilerdüsen in einstellbaren Mengen zugeleitet.

Der Flüssigkeitstank 5 weist auf seiner oberen Vorderseite eine größere mit einem zu öffnenden Deckel 6 zu verschließende Tanköffnung auf. Weiterhin ist in der obersten Wand 7 möglichst im Bereich ihres höchsten Bereiches eine Befüllöffnung 8 angeordnet. Über diese Befüllöffnung 8 lässt sich in nachstehend beschriebener Weise über eine Zuleitung 9 zugeführtes Frischwasser zur Befüllung des Flüssigkeitstanks 5 einfüllen. Der Befüllöffnung 8 ist ein Befüllanschluss 10 zugeordnet. Diesem Befüllanschluss 10 ist eine Rücksaugverhinderungseinrichtung 11 zugeordnet.

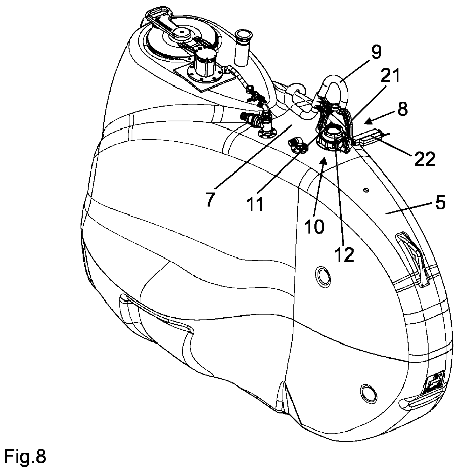

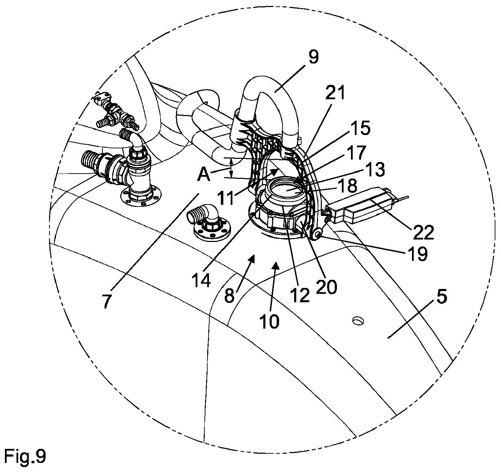

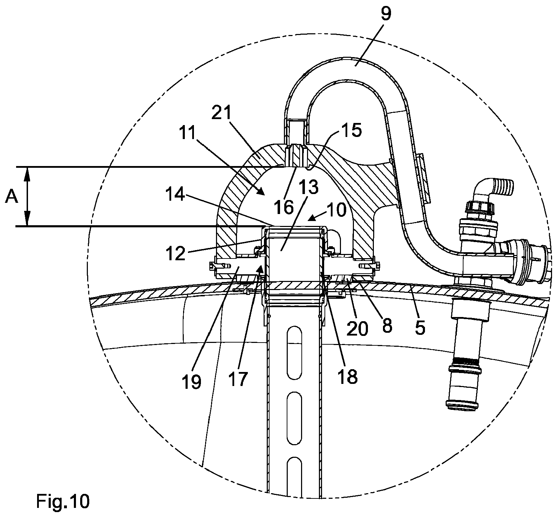

In der Befüllöffnung 8 ist ein Adapter 12 mit einer Durchlassöffnung 13 angeordnet. In einem Abstand A oberhalb zu dem oberen Ende 14 der an dem Flüssigkeitstank 5 angeordneten Durchlassöffnung 13 endet das Ende 15 der Zuleitung 9 des Befüllanschlusses 10, wenn das Ende 15 der Zuleitung 9 sich in der Befüllposition gemäß der Fig. 8-10 befindet. Durch diesen Abstand A, der zumindest den in der DIN EN 1717 entsprechenden Vorschriften entspricht, wird eine vorschriftsmäßige Rücksaugverhinderungseinrichtung 11 erreicht. Zur sicheren Überleitung des aus dem Ende 14 der Zuleitung 9 ausströmenden Frischwassers in die Durchlassöffnung 13 der Befüllöffnung 8 weist die Durchlassöffnung 13 einen wesentlichen größeren Durchmesser als das Ende 15 der Zuleitung 9 auf. Die saubere Überleitung des aus dem Ende 15 der Zuleitung 9 austretenden Frischwassers in die Durchlassöffnung der Befüllöffnung wird durch eine dem Ende 15 der Zuleitung 9 des Befüllanschlusses 10 zugeordnete Flüssigskeitsbündelungseinrichtung 16 gewährleistet. Durch diesen Abstand A, der zumindest den in der DIN EN 1717 entsprechenden Vorschriften entspricht, wird ein gerichteter Flüssigkeitsstrom 5 in Richtung des an dem Flüssigkeitstank angeordneten Bereiches des Befüllanschlusses 10 erzeugt.

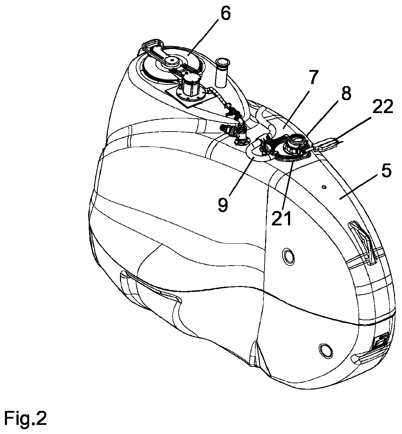

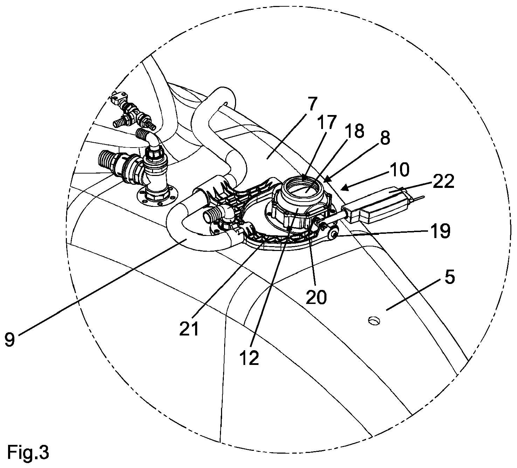

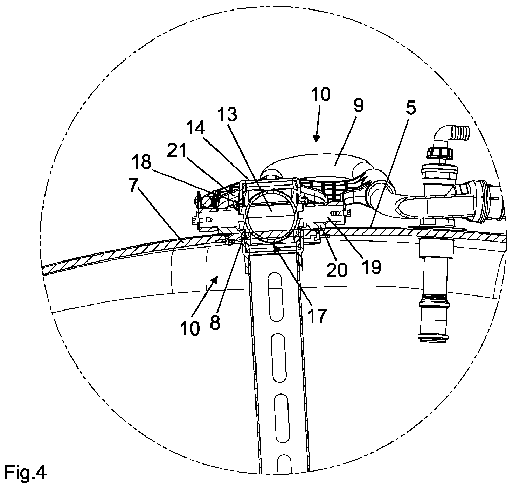

Dem oberen Ende 14 des an dem Flüssigkeitstank 5 angeordneten Bereiches des Befüllanschlusses 10, der von der Durchlassöffnung 13 gebildet wird, ist in der Durchlassöffnung 13 ein als Kugelhahn 17 ausgebildetes Verschlusselement 18 angeordnet, um die Durchlassöffnung 13 und somit die Befüllöffnung 10 für den Transport und den Ausbringvorgang auf dem Feld verschließen zu können. Somit lässt sich der Befüllanschluss 10 für die Außerbefüllstellung gemäß den Fig. 2 bis 4 durch das Verschlusselement 18 verschließen.

Das kugelartige und eine Durchlassbohrung aufweisende Verschlusselement 18 ist an einer verdrehbaren Welle 19 in dem die Durchlassöffnung umschließenden Gehäuse 20 angeordnet. Diese verdrehbare Welle 19 ragt zumindest auf einer Seite aus dem Gehäuse 20 heraus. An dem zumindest einem aus dem Gehäuse 20 herausragenden Bereich dieser verdrehbaren Welle 19 des Verschlusselementes 18 ist eine Schwenkvorrichtung 21 drehfest verbunden. Die Schwenkvorrichtung 21 ist bügelartig ausgebildet. Wenn beide Enden der verdrehbaren Welle 19 aus dem Gehäuse herausragen, weist die Schwenkvorrichtung 21 einen U-förmigen Bügel aus, dessen freie Enden mit den Wellenenden der Welle 19 drehfestverbunden sind.

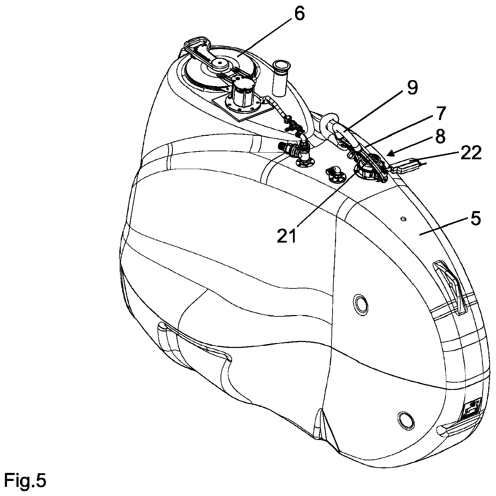

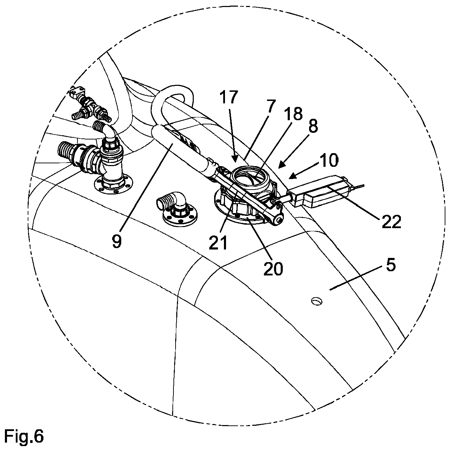

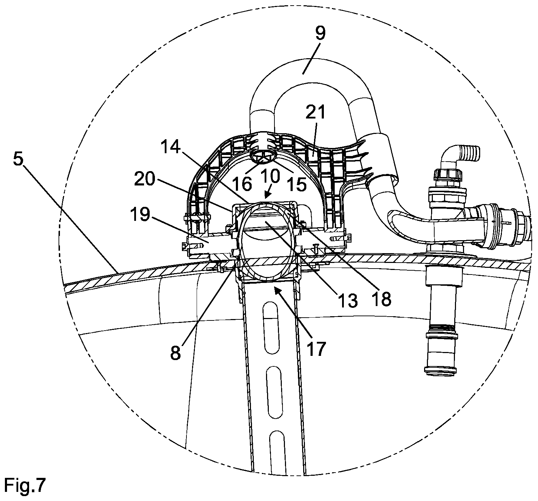

An der bügelartigen Schwenkvorrichtung 21 ist die Zuleitung 9 oberhalb der Befüllöffnung 8 an dem Flüssigkeitstank 5 angeordnet und so dem Flüssigkeitstank 5 zugeordnet. Hierbei ist die Schwenkvorrichtung 21 so ausgestaltet, das sie um zumindest 90° aus einer aufrechten Befüllstellung gemäß der Fig. 8 bis 10 über eine in den Figuren 5 bis 7 dargestellte Zwischenstellung in eine liegende Außerbefüllstellung gemäß Fig. 2 bis 4 verbringbar ist.

Durch die drehfeste Verbindung zwischen der bügelartigen Schwenkvorrichtung 21 und dem ebenfalls drehfest mit der Welle 17 verbundenen kugelartigen Verschlusselement 18 wird das Verschlusselement 18 je nach Stellung der Schwenkvorrichtung 21 in die Durchlassstellung gemäß Fig. 8 bis 10 zum Befüllen des Flüssigkeitstanks mit Frischwasser oder in die Verschlussstellung gemäß Fig. 2 bis 4 gebracht. Somit ist das Verschlusselement 18 für dessen Verstellung mittels Übertragungselementen mit der verschwenkbar angeordneten Schwenkvorrichtung 21 und/oder dem Endbereich der Zuleitung 9 verbunden.

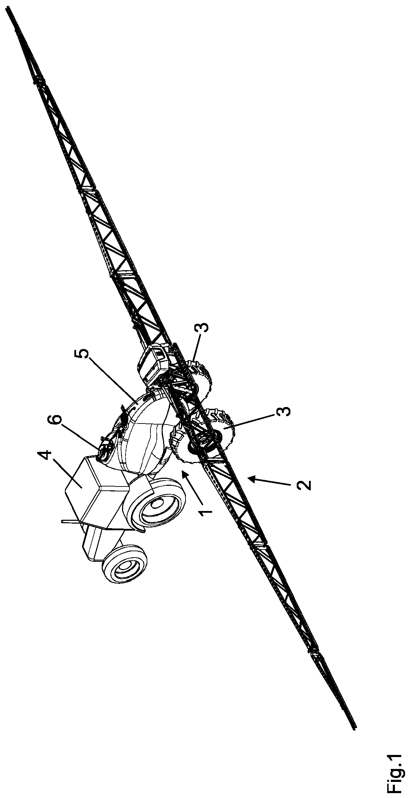

Durch die vor beschriebene Ausgestaltung wird eine niedrige Bauhöhe der Pflanzenschutzspritze für den Betrieb im öffentlichen Straßenverkehr durch das Herunterschwenken der Zuleitung 9 in eine liegende Position direkt oberhalb der obersten Wand des Flüssigkeitstanks 5 geschaffen, wie in den Fig. 1 bis 4 gezeigt ist. Somit befindet sich für den Betrieb der Pflanzenschutzspritze im öffentlichen Straßenverkehr der Befüllanschluss 10 und die daran angeschlossene Zuleitung 9 in liegender und anschmiegender Weise gemäß Fig. 1 bis 4 auf der obersten Wand des Flüssigkeitstanks 5. Zum Befüllen des Flüssigkeitstanks 5 mit Frischwasser wird der Befüllanschlusses 10 und die daran angeschlossene Zuleitung 9 wieder in die aufrechte Stellung gemäß Fig. 8 bis 10 gebracht, so dass die Funktion der Rücksaugverhinderungseinrichtung beim Befüllvorgang des Flüssigkeitstanks gewährleistet ist.

Die Schwenkvorrichtung ist mittels einer zugeordneten Betätigungsvorrichtung 22 in die jeweils vorgesehene Befüllstellung oder Außerbefüllstellung verbringbar.

Diese Betätigungsvorrichtung 22 im Ausführungsbeispiel als motorisches Betätigungselement ausgebildet.

In einer weiteren Ausgestaltung kann die Betätigungsvorrichtung in nicht dargestellter Weise über Übertragungselemente entsprechend der Position von Vorrichtungen, die zum Befüllen des Flüssigkeitstanks 5 in eine Befüll- oder in eine Nichtbefüllposition verbracht werden, betätigt und/oder angesteuert wird. Hier können mechanische oder elektromotorische Übertragungselemente zum Einsatz kommen. Auch können mechanische, elektrische oder elektronische Erfassungsvorrichtungen von Stellpositionen zum Einsatz kommen, anhand derer die der Schwenkvorrichtung zugeordneten Stellorgane betätigt und/oder angesteuert werden.

Mit den vorerwähnten Vorrichtungen, die zum Befüllen des Flüssigkeitstanks in eine Befüll- oder eine Nichtbefüllposition verbracht werden, sind beispielsweise Einspülbehälter, Abdeckkappen vor Spritzarmaturen oder ähnliche Vorrichtungen angesprochen

Es wird darauf hingewiesen, dass in den vorliegenden Zeichnungen der Pflanzenschutzspritze diese nicht voll funktionsfähig dargestellt ist, sondern viele Verbindungsleitungen, Dosiervorrichtungen und Förderpumpen der Übersicht wegen weggelassen sind, um eine bessere Übersichtlichkeit zu gewährleisten. Es ist im Wesentlichen nur die Befülleinrichtung mit dem Befüllanschluss noch als Erfindung dargestellt.

## Patentansprüche

1. Landwirtschaftliche Pflanzenschutzspritze (1) mit einem Flüssigkeitstank (5), der in seiner obersten Wand (7), vorzugsweise in seinem höchsten Bereich eine Befüllöffnung (8) mit einem eine an eine Zuleitung (9) angeschlossenen und mit einer Rücksaugverhinderungseinrichtung (11) ausgerüsteten Befüllanschluss (10) zum Befüllen des Flüssigkeitstanks (5) mit Frischwasser, insbesondere aus einem öffentlichen Wassernetz aufweist, **dadurch gekennzeichnet, dass** die Zuleitung (9) oberhalb der Befüllöffnung (8) mittels einer Schwenkvorrichtung (21) an dem Flüssigkeitstank (5) angeordnet und/oder dem Flüssigkeitstank (5) zugeordnet und um zumindest 90° aus einer aufrechten Befüllstellung in eine liegende Außerbefüllstellung verbringbar ist.

2. Pflanzenschutzspritze nach Anspruch 1, **dadurch gekennzeichnet, dass** das Ende (15) der Zuleitung (9) des Befüllanschlusses (10) in einem Abstand (19) oberhalb des an dem Flüssigkeitstank (5) angeordneten Bereiches (A) des Befüllanschlusses (10) endet.

3. Pflanzenschutzspritze nach Anspruch 2, **dadurch gekennzeichnet, dass** der Abstand (A) zumindest den in der DIN EN 1717 entsprechenden Vorschriften entspricht.

4. Pflanzenschutzspritze nach Anspruch 1, **dadurch gekennzeichnet, dass** dem Ende (15) der Zuleitung (9) des Befüllanschlusses (10) eine Flüssigskeitsbündelungseinrichtung (16) für einen gerichteten Flüssigkeitsstrom in Richtung des an dem Flüssigkeitstank (5) angeordneten Bereiches (14) des Befüllanschlusses (10) zugeordnet ist.

5. Pflanzenschutzspritze nach zumindest einem der vorstehenden Ansprüche, **dadurch gekennzeichnet, dass** dem oberen Ende des an dem Flüssigkeitstank (5) angeordneten Bereiches (14) des Befüllanschlusses (10) zumindest ein den Befüllanschluss (10) für die Außerbefüllstellung verschließendes Verschlusselement (18) zugeordnet ist.

6. Pflanzenschutzspritze nach Anspruch 1, **dadurch gekennzeichnet, dass** das Verschlusselement (18) als Kugelhahn ausgebildet ist.

7. Pflanzenschutzspritze nach zumindest einem der vorstehenden Ansprüche, **dadurch gekennzeichnet, dass** das Verschlusselement (18) für dessen Verstellung mittels Übertragungselementen mit der verschwenkbar angeordneten Schwenkvorrichtung (21) und/oder dem Endbereich der Zuleitung (9) verbunden ist.

8. Pflanzenschutzspritze nach zumindest einem der vorstehenden Ansprüche, **dadurch gekennzeichnet, dass** das Verschlusselement (18) an einer verdrehbaren Welle angeordnet ist, dass die Schwenkvorrichtung mit der verdrehbaren Welle (19) des Verschlusselementes (18) drehfest verbunden ist.

9. Pflanzenschutzspritze nach zumindest einem der vorstehenden Ansprüche, **dadurch gekennzeichnet, dass** die Schwenkvorrichtung (21) mittels einer zugeordneten Betätigungsvorrichtung (22) in die jeweils vorgesehene Befüllstellung oder Außerbefüllstellung verbringbar ist.

10. Pflanzenschutzspritze nach zumindest einem der vorstehenden Ansprüche, **dadurch gekennzeichnet, dass** die Betätigungsvorrichtung (22) als motorisches Betätigungselement ausgebildet ist.

11. Pflanzenschutzspritze nach zumindest einem der vorstehenden Ansprüche, **dadurch gekennzeichnet, dass** die Betätigungsvorrichtung (22) über Übertragungselemente entsprechend der Position von Vorrichtungen, die zum Befüllen des Flüssigkeitstanks in eine Befüll- oder in eine Nichtbefüllposition verbracht werden, betätigt und/oder angesteuert wird.
